# FASCICULE DE BREVET EUROPEEN

(11) **EP 0 747 283 B1**
(45) Date de publication et mention de la délivrance du brevet: **23.06.1999**
(21) Numéro de dépôt: 96401135.7
(22) Date de dépôt: 24.05.1996
(51) Int. Cl.: B62D 25/24, F16B 5/07

(54) **Dispositif d'obturation de trous dans des pièces quelconques**
Vorrichtung zur Abdichtung von Öffnungen in beliebigen Teilen
Device for sealing of holes in pieces of any type

(30) Priorité: 09.06.1995 FR 9506860
(43) Date de publication de la demande: 11.12.1996
(73) Titulaire: AUTOMOBILES PEUGEOT, 75116 Paris (FR); AUTOMOBILES CITROEN, 92200 Neuilly-sur-Seine (FR)
(72) Inventeur: Muller, Patrick, 25200 Montbéliard (FR)
(74) Mandataire: Durand, Yves Armand Louis

(56) Documents cités:
- EP-A- 0 252 039
- EP-A- 0 645 315
- DE-B- 1 243 535
- GB-A- 2 167 515
- US-A- 3 018 024

## Description

La présente invention concerne un dispositif d'obturation de trous dans des pièces quelconques et telles que les panneaux de garniture utilisés sur les véhicules automobiles.

Il a déjà été proposé depuis longtemps d'obturer les orifices de pièces à l'aide d'éléments comprenant une tête d'obturation munie de pattes permettant le clippage de la tête sur l'orifice.

Toutefois, lorsque les pièces sont souples ou peu rigides, comme c'est le cas des panneaux de garniture, l'effort de pression qui doit être effectué sur la tête d'obturation pour réaliser le clippage déforme la pièce à obturer, de sorte que le clippage devient aléatoire.

Par ailleurs, si la pièce ou le panneau n'est pas ou est peu déformable, il demeure que les pattes de l'obturateur, lors du clippage, émoussent le contour du trou à obturer, ce qui nuit à un bon clippage. De plus, le démontage de l'obturateur entraîne la détérioration du panneau, ce qui empêche tout remontage ultérieur.

Il y a aussi la solution qui consiste à utiliser un renfort ou insert fendu engagé dans le trou à obturer avant d'effectuer le clippage de l'obturateur. Ce système résoud les inconvénients signalés précédemment (clippage rendu possible, panneau non détérioré, démontage-remontage possibles), mais, par contre, il exige une pièce supplémentaire, à savoir l'insert, ce qui augmente les coûts de fabrication et de main d'oeuvre.

Aussi, la présente invention a pour but de remédier à tous les inconvénients ci-dessus en proposant un nouveau concept d'obturateur qui se compose d'une pièce unique, est facile et rapide à monter et démonter, et ne risque en aucun cas de détériorer la matière à obturer.

A cet effet, l'invention a pour objet un dispositif d'obturation de trous dans des pièces quelconques et réalisées par exemple en matière souple ou peu rigide, du type comprenant un élément muni de pattes élastiquement déformables, ou premières pattes, susceptibles de s'accrocher sur le bord du trou (voir GB-A-2167515), caractérisé en ce que ledit élément présente la forme d'un cadre auquel est articulé un volet ou analogue muni de pattes, ou deuxièmes pattes, et rabattable contre le cadre pour que les deuxièmes pattes traversant ce cadre coopèrent avec les premières pattes afin de permettre l'accrochage de ces dernières sur le bord du trou.

Ce dispositif est encore caractérisé en ce que les premières pattes sont réparties sur le pourtour du cadre et font saillie d'un côté de celui-ci en étant infléchies vers l'intérieur du cadre.

Suivant une autre caractéristique de ce dispositif, le cadre est articulé au volet par un film mince de matière venant de moulage avec le cadre et le volet.

On précisera encore ici que les deuxièmes pattes précitées s'étendent orthogonalement au plan du volet.

Selon encore une autre caractéristique de ce dispositif, le cadre et le volet présentent chacun la forme d'un rectangle aux quatre angles duquel sont situées les pattes précitées.

Mais d'autres caractéristiques et avantages de l'invention apparaîtront mieux dans la description détaillée qui suit et se réfère aux dessins annexés, donnés uniquement à titre d'exemple, et dans lesquels :
La figure 1 est une vue en perspective et à l'état déployé du dispositif d'obturation selon cette invention.
La figure 2 est une vue en coupe de ce dispositif prêt à être monté dans l'orifice d'un panneau.
La figure 3 est une vue similaire à la précédente mais montrant le dispositif en position engagée dans l'orifice du panneau à obturer.
La figure 4 est une vue similaires aux figures 2 et 3 mais montrant le dispositif prêt à être clippé sur l'orifice du panneau par rabattement du volet.
La figure 5 illustre le dispositif en position finale et verrouillée d'obturation de l'orifice.

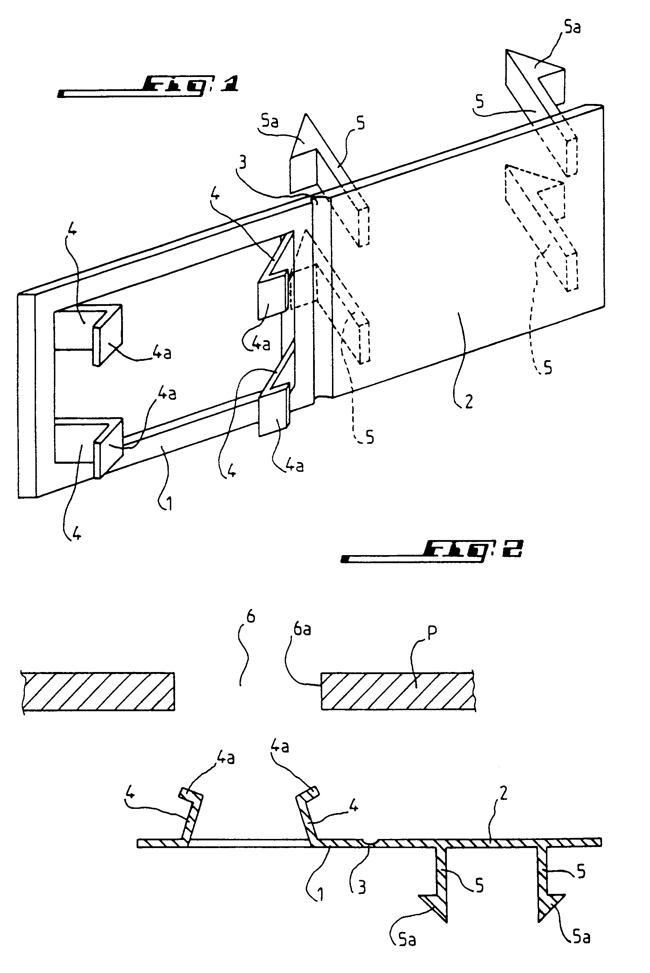

En se reportant notamment à la figure 1, on voit qu'un dispositif d'obturation selon cette invention et suivant un exemple de réalisation comprend essentiellement un cadre 1 auquel est articulé un volet plein 2, de préférence par l'intermédiaire d'une charnière constituée par un film de matière souple et mince 3.

Le cadre 1 et le volet 2 pourront être réalisés en toute matière synthétique appropriée, dans quel cas le film mince 3 formant charnière viendra de moulage avec ledit cadre et ledit volet.

Le cadre 1 est muni sur son pourtour d'une pluralité de pattes 4 faisant saillie d'un côté dudit cadre et infléchies vers l'intérieur de ce cadre, comme on le voit bien sur la figure 1.

Le volet 2 comporte lui aussi des pattes 5 qui, suivant l'exemple de réalisation représenté, s'étendent orthogonalement au plan du volet 2, mais à l'opposé des pattes 4, lorsque l'ensemble cadre 1-volet 2 se trouve dans la position déployée visible sur la figure 1.

Suivant l'exemple de réalisation représenté, le cadre 1 et le volet 2 présentent la forme d'un rectangle au voisinage des quatre sommets duquel prennent naissance les pattes 4, 5.

Ces pattes 4 et 5 sont, comme connu en soi constituées par une languette dont l'extrémité libre présente une forme de crochet 4a, 5a, étant entendu qu'au moins les pattes 4 sont élastiquement déformables pour pouvoir s'accrocher dans le trou 6 d'une pièce quelconque P, telle qu'un panneau de garnissage souple dans l'habitacle d'un véhicule automobile.

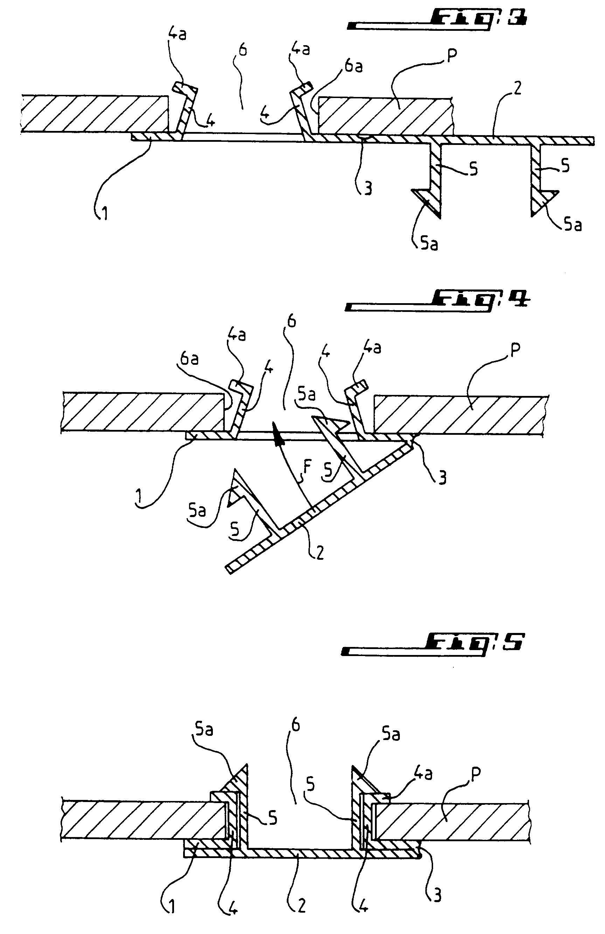

Mais, pour une meilleure compréhension de l'invention, on décrira ci-après comment s'effectue le montage du dispositif d'obturation qui vient d'être décrit en se reportant successivement aux figures 2 à 5.

Tout d'abord, comme on le voit bien sur la figure 2, les pattes 4 du cadre 1 sont présentées en regard du trou 6 à obturer.

Puis, comme on le voit sur la figure 3, les pattes 4 du cadre 1 sont introduites dans le trou 6, et cela sans aucune difficulté ni gêne, puisque ces pattes sont infléchies vers l'intérieur du cadre.

Ensuite, le volet 2 est, comme on le voit sur la figure 4, rabattu, par pivotement autour de la charnière en film mince 3, contre le cadre 1, selon la flèche F.

Ainsi, les pattes 5 du volet 2 traversent le cadre 1 et repoussent les pattes 4 de ce cadre qui, en fin de pivotement du volet 2 et comme on le voit bien sur la figure 5, s'accrochent sur le bord 6a du trou 6, étant entendu que les pattes 5 du volet 2 se verrouillent par leurs extrémités 5a sur les pattes 4 du cadre 1.

Dès lors, on comprend que les pattes 4 du cadre 1 sont introduites dans le trou 6 sans en affecter le bord 6a et que les pattes 5 du volet 2 provoquent l'écartement des pattes 4 en direction du bord 6a du trou 6, de sorte qu'au total ledit bord et, d'une manière générale, la matière de la pièce P ne risquent aucunement d'être détériorés, que ce soit au montage ou même au démontage et remontage ultérieurs de l'obturateur.

Bien entendu, cette invention n'est nullement limitée au mode de réalisation décrit et illustré qui n'a été donné qu'à titre d'exemple.

C'est ainsi que les pattes 4 et 5 pourraient être agencées d'une autre façon que celle représentée, et leur nombre pourrait être différent de quatre. De même, le cadre 1 et son volet associé pourraient présenter une forme autre que rectangulaire, à savoir par exemple une forme circulaire.

C'est dire que l'invention comprend tous les équivalents techniques des moyens décrits ainsi que leurs combinaisons si celles-ci entrent dans le cadre des revendications qui suivent.

## Revendications

1. Dispositif d'obturation de trous (6) dans des pièces quelconques (P) et réalisées par exemple en matière souple ou peu rigide, du type comprenant un élément muni de pattes élastiquement déformables, ou premières pattes (4), susceptibles de s'accrocher sur le bord (6a) du trou (6), caractérisé en ce que ledit élément présente la forme d'un cadre (1) auquel est articulé un volet ou analogue (2) muni de pattes, ou deuxièmes pattes (5), et rabattable contre le cadre (1) pour que les deuxièmes pattes (5) traversant ce cadre (1) coopèrent avec les premières pattes (4) afin de permettre l'accrochage de ces dernières sur le bord (6a) du trou (6).

2. Dispositif d'obturation selon la revendication 1, caractérisé en ce que les premières pattes (4) sont réparties sur le pourtour du cadre (1) et font saillie d'un côté de celui-ci en étant infléchies vers l'intérieur du cadre.

3. Dispositif d'obturation selon la revendication 1 ou 2, caractérisé en ce que le cadre (1) est articulé au volet (2) par un film mince de matière (3) venant de moulage avec ledit cadre et ledit volet.

4. Dispositif d'obturation selon la revendication 1, caractérisé en ce que les deuxièmes pattes (5) s'étendent orthogonalement au plan du volet (2).

5. Dispositif selon l'une des revendications précédentes, caractérisé en ce que le cadre (1) et le volet (2) présentent la forme d'un rectangle aux quatre angles duquel sont situées les pattes précitées (4, 5).

## Claims

1. Device for closing holes (6) in any parts (P) whatsoever made for example from a flexible or not very rigid material, of the type comprising an element provided with elasticly deformable lugs or first lugs (4), adapted to hook themselves onto the edge (6a) of the hole (6), characterized in that the said element exhibits the shape of a frame (1) to which is pivotally connected a flap or the like (2) provided with lugs or second lugs (5) and foldable back onto the frame (1) in order that the second lugs (5) extending through this frame (1) co-operate with the first lugs (4) in order to permit the hooking of the latter onto the edge (6a) of the hole (6).

2. Closing device according to claim 1, characterized in that the first lugs (4) are distributed over the periphery of the frame (1) and project from one side thereof while being curved towards the inside of the frame.

3. Closure device according to claim 1 or 2, characterized in that the frame (1) is pivotally connected to the flap (2) by a thin film of material (3) molded integral with the said frame and the said flap.

4. Closure device according to claim 1, characterized in that the second lugs (5) extend orthogonally to the plane of the flap (2).

5. Device according to one of the foregoing claims, characterized in that the frame (1) and the flap (2) exhibit the shape of a rectangle at the four apex corners of which are located the aforesaid lugs (4, 5).

## Patentansprüche

1. Vorrichtung zum Verschließen von Löchern (6) in irgendwelchen zum Beispiel aus einem nachgiebigen beziehungsweise nicht sehr steifen Werkstoff hergestellten Werkstücken (P), derjenigen Gattung mit einem mit elastisch verformbaren Ansatzlappen beziehungsweise ersten Ansatzlappen (4) versehenen Element, die fähig sind, sich an dem Rand (6a) des Loches (6) anzuhaken, dadurch gekennzeichnet, daß das besagte Element die Gestalt eines Rahmens (1) aufweist, an welchem eine mit Ansaztlappen oder zweiten Ansatzlappen (5) versehenen Klappe oder dergleichen (2) angelenkt ist, die auf den Rahmen (1) zurückklappbar ist, damit die diesen Rahmen (1) durchsetzenden zweiten Ansatzlappen (5) mit den ersten Ansatzlappen (4) zusammenwirken, um das Anhaken dieser letzteren an dem Rand (6a) des Loches (6) zu gestatten.

2. Verschlußvorrichtung gemäß Anspruch 1, dadurch gekennzeichnet, daß die ersten Ansatzlappen (4) über den Umfang des Rahmens (1) verteilt sind und von einer Seite desselben unter Krümmung zum inneren des Rahmens hin hervorstehen.

3. Verschlußvorrichtung gemäß Anspruch 1 oder 2, dadurch gekennzeichnet, daß der Rahmen (1) an der Klappe (2) durch einen dünnen mit dem besagten Rahmen und der besagten Klappe einstückig geformten Werkstoffilm (3) angelenkt ist.

4. Verschlußvorrichtung gemäß Anspruch 1, dadurch gekennzeichnet daß die zweiten Ansatzlappen (5) sich senkrecht zu der Ebene der Klappe (2) erstrecken.

5. Vorrichtung nach einem der vorangehenden Ansprüche, dadurch gekennzeichnet, daß der Rahmen (1) und die Klappe (2) die Gestalt eines Vierecks aufweisen, an dessen Viereckwinkeln die vorgenannten Ansatzlappen (4, 5) gelegen sind.
